## Europäisches Patentamt

## European Patent Office

## Office européen des brevets

(11) Numéro de publication: **0 117 386**

**B1**

(12) # FASCICULE DE BREVET EUROPÉEN

(45) Date de publication du fascicule du brevet:
04.11.87

(51) Int. Cl.⁴: **G 01 M 3/28**

(21) Numéro de dépôt: **83870013.6**

(22) Date de dépôt: **01.03.83**

(54) **Détecteur de fuite pour batardeau de piscine nucléaire.**

(43) Date de publication de la demande:
**05.09.84 Bulletin 84/36**

(45) Mention de la délivrance du brevet:
**04.11.87 Bulletin 87/45**

(84) Etats contractants désignés:
**AT BE CH DE FR GB IT LI LU NL SE**

(56) Documents cité:
**DE-B-2 317 301**

(73) Titulaire: **ATELIERS DE CONSTRUCTIONS ELECTRIQUES DE CHARLEROI (ACEC) Société Anonyme, Avenue Lloyd George 7, B-1050 Bruxelles (BE)**

(72) Inventeur: **Simon, André, 9, Rue De Wayaux, B-6208 Les Bons Villers (BE)**

LIBER, STOCKHOLM 1987

## Description

Dans les centrales nucléaires et dans les usines de retraitement, le combustible irradié est obligatoirement stocké dans de grands bassins remplis d'eau. Cette eau sert à la fois d'écran biologique contre les rayonnements émis au cours de la décroissance des produits de fission et de véhicule pour l'évacuation de la chaleur résiduelle du combustible.

Ces grands bassins de stockage sont divisés en plusieurs compartiments indépendants pouvant communiquer de l'un à l'autre par l'ouverture d'un ou de plusieurs batardeaux. Lors de l'isolation d'un compartiment par la fermeture ces batardeaux, il importe, pour de multiples raisons, d'assurer l'étanchéité de chaque batardeau entre la porte et son chambranle. Par exemple, il convient d'éviter un mélange d'eaux de conditionnement chimique différent, contenues dans des compartiments adjacents ou encore, il importe de mettre à sec un des compartiments pour y effectuer des travaux d'entretien ou de réparations.

La présente invention concerne un dispositif qui associé à chaque batardeau permet de détecter rapidement une fuite et d'en mesurer l'importance.

Ce dispositif s'adopte aussi bien au chambranle d'une porte montée sur charnières qu'aux glissières verticales d'un panneau coulissant. Il suffit pour cela que la face latérale de la porte ou du panneau coulissant soit muni d'au moins deux joints d'étanchéité disposés côte à côte sur son pourtour. Le dispositif est constitué de détecteurs de niveaux raccordés à l'espace libre ménagé entre les joints d'étanchéité de la porte ou du panneau coulissant en position de fermeture.

On connaît des centrales nucléaires comportant des bassins de stockage d'éléments de combustible réunis entre eux par des portes rendues étanches à l'aide de joints éventuellement gonflables. Un but de l'invention est de détecter une fuite survenant entre un bassin mis à sec ou non et ses voisins sous eau.

. Un autre but de l'invention est de mesurer l'importance de la fuite. Les buts de la présente invention sont atteints par un dispositif comme décrit dans la revendication 1.

L'invention est exposée en détails à l'aide des figures suivantes pour un batardeau articulé sur des charnières.

La figure 1 montre une vue en plan d'un batardeau.

La figure 2 représente une vue en élévation d'une ouverture reliant deux compartiments voisins.

La figure 3 donne les détails d'une vue en coupe des joints placés en série.

La figure 4 est une variante de réalisation.

La figure 5 représente une vue en coupe d'un détecteur de niveau.

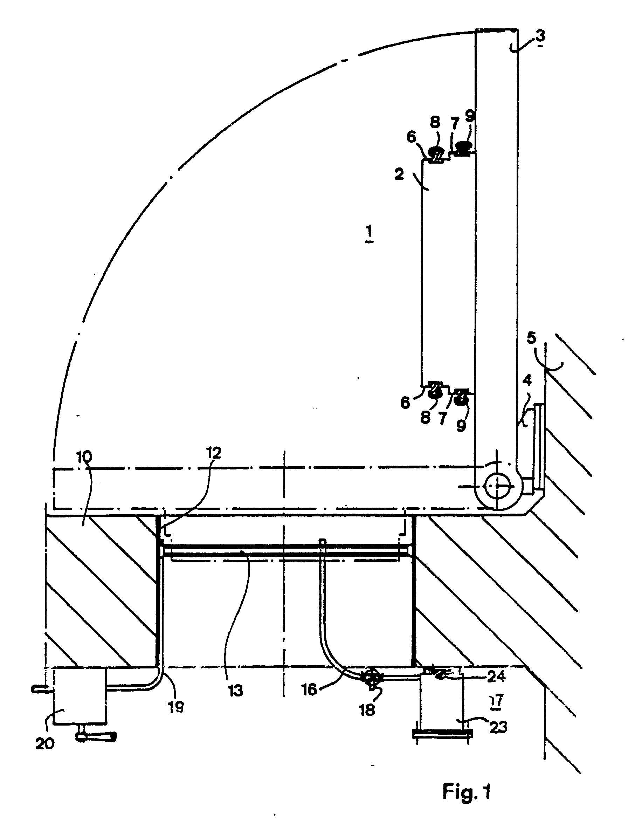

La figure 1 représante un batardeau 1 constitué d'une porte 2 adossée à plusieurs traverses réparties sur la hauteur immergée du batardeau 1. Chaque traverse, dont seule une traverse supérieure 3 est représentée, est nantie à une extrémité d'une charnière 4 adossée à un mur 5 du bassin.

La porte 2 est de forte épaisseur et présente à mi-épaisseur un seuil qui s'étend sur toute la partie immergée de la porte 2 pour définir deux surfaces d'appui étagées 6 et 7 pour des joints d'étanchéité 8 et 9, gonflables lorsque la porte 2 est en position de fermeture.

Un mur de cloisonnement 10, séparant le bassin en compartiments est percé d'une ouverture 11 dont les bords arrondis à la base lui donnent une forme en U. Cette ouverture 11 est tapissée intérieurement d'un recouvrement métallique 12 portant une surépaisseur 13 de largeur appropriée et positionnée de manière à servir de surface de pose au joint 8 lorsque le batardeau 1 est fermé. Le recouvrement métallique 12 et la surépaisseur 13 constituent le chambranle 14 de la porte 2. En position de fermeture du bartardeau 1, le joint 9 vient s'appuyer directement sur une partie du recouvrement métallique 12. De la sorte, la surépaisseur 13, les deux joints d'étanchéité 8 et 9 et les surfaces comprises entre ces deux joints 8 et 9 et appartenant respectivement à la porte 2 et au chambranle 14 définissent un espace libre 15 nomalement à sec, même si les compartiments du bassin situés de part et d'autre du mur de cloisonnement 10 sont immergés.

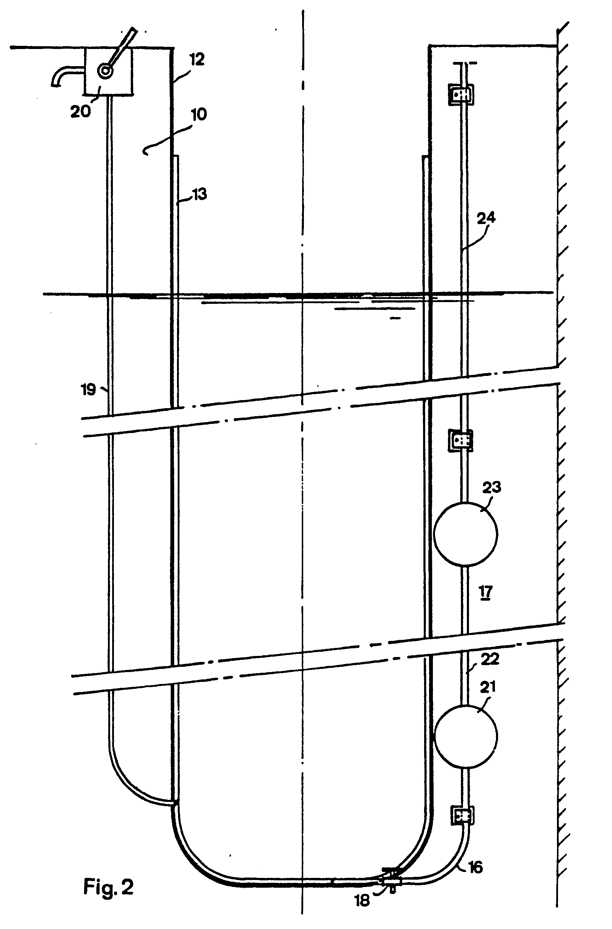

A la partie basse de cet espace libre 15, existant sur tout le pourtour de la partie immergée de la porte 2 débouche un tuyau 16, raccordé à un dispositif de détection de niveau 17 et équipé d'un robinet de vidange 18. Dans ce même espace libre 15 débouche à un endroit précisé en figure 2, un second tuyau 19 raccordé à une pompe à main 20.

La figure 2 représente en élévation le mur de cloissonnement 10 et son ouverture 11, en forme de U, tapissée intérieurement du recouvrement métallique 12 auquel est solidarisée la surépaisseur 13 pour former le chambranle 14 de la porte 2.

Le dispositif de détection 17 comporte un premier détecteur de niveau 21 raccordé par un tuyau 22 à un second détecteur de niveau 23. Un tuyau 24 dépasse le niveau d'eau et sert de trop-plein.

Dans l'espace libre 15 le tuyau 19 débouche à un niveau un peu inférieur à celui du premier détecteur de niveau 21. Le rôle de ce tuyau 19 et de la pompe à main 20 sera précisé ultérieurement.

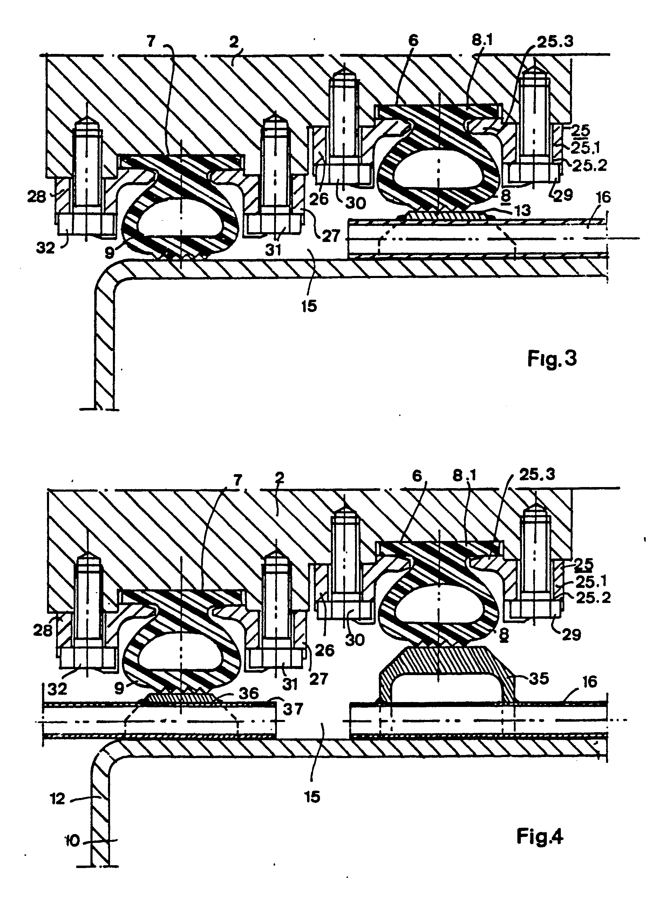

La figure 3 est une coupe faite selon l'axe du tuyau 16. Elle montre en détail les joints d'étanchéité 8 et 9 et leur dispositif de fixation. Celui-ci est constitué de pièces de fixation 25, 26, 27 et 28 maintenues par des vis 29, 30, 31, 32 régulièrement réparties le long des joints 8 et 9.

Dans l'espace libre 15 débouche le tuyau 16 d'un diamètre inférieur à la surépaisseur 13 de façon à ne pas interrompre à l'endroit du passage du tuyau 16 à travers la surépaisseur 13 l'étanchéité entre le joint 8 et sa surface de pose constituée par la surépaisseur 13. Chaque pièce de fixation, soit par exemple la pièce de fixation 25, est constituée d'un corps principal 25.1, conforme au pourtour de la porte 2 et, percé de trous 25.2 régulièrement répartis sur toute la longueur de joint 8, et d'un appendice 25.3, s'étalant lui aussi sur toute la longueur du joint 8 et dont l'épaisseur est adaptée pour écraser d'une manière contrôlée l'aile d'une semelle 8.1 du joint 8.

Dans l'exemple de réalisation de la figure 3, les joints d'étanchéité 8 et 9 sont gonflables et portent plusieurs rainures longitudinales qui permettent lors du déplacement du batardeau 1 de racler les surfaces de pose pour éliminer les petites particules étrangères risquant à nuire à l'étanchéité.

Lorsque le batardeau 1 est fermé, l'espace libre 15, existant entre les deux joints 8 et 9 est normalement étanche et reste sec. Mais dès qu'un joint d'étanchéité est défectueux cet espace 15 se remplit d'eau à une vitesse variable selon la gravité de la fuite. En cas de fuite le volume à remplir est constitué par l'espace libre 15, les tuyaux 16 et 19 reliés à cet espace libre 15, les détecteurs de niveaux 21 et 23 et le tuyau 22 qui les raccorde l'un à l'autre.

Les détecteurs de niveau 21 et 23 sont conçus pour émettre un signal dès qu'un niveau déterminé est atteint. Dès lors pour rendre compte d'un taux de fuite du batardeau 1 il suffit d'étalonner la portion de volume à remplir comprise entre les deux détecteurs de niveau 21 et 23, portion de volume appelée volume d'étalonnage et de mesurer le temps écoulé entre le signal emis par le détecteur de niveau 21 et le signal émis par le détecteur de niveau 23. Plus la fuite sera importante, plus le temps séparant les deux signaux émis par les détecteurs de niveau 21 et 23 sera court.

Pour connaître l'évolution du taux de fuite, le tuyau 19 débouchant dans la partie libre 15, un peu sous le niveau du premier détecteur de niveau 21 est raccordé à une pompe à main 20. Le tuyau 19 et la pompe à main 20 permettent de vider l'eau provenant de la fuite pour ramener le niveau en dessous de celui corrrespondant à l'émission d'un signal par le premier détecteur de niveau 21. De la sorte par comparaison entre les temps écoulés entre les deux signaux emie par les détecteurs de niveau 21 et 23 on peut déterminer l'évolution du taux de fuite dans le temps. Lorsque le compartiment situé du côté du robinet de vidange 18 est vide, pour des raisons d'entretien ou de réparation par exemple, on peut vérifier immédiatement l'étanchéité du joint 9 en ouvrant le robinet de vidange 18 qui, situé au point bas du volume à remplir en cas de fuite, s'écoule dès qu'apparaît un défaut d'étanchéité du joint 9 permettant ainsi de prendre les dispositions qui s'imposent.

Dans l'exemple de réalisation montré dans les figures 1 et 3, les surfaces d'appui 6 et 7 sont étagées pour éviter que le joint d'étanchéité 8 accroche le chambranle 14 en cours de manoeuvre d'ouverture ou de fermeture du batardeau.

Dans un autre exemple de réalisation montré en figure 4, les joints d'étanchéité 8 et 9 ont respectivement comme surface de pose des surépaisseurs 35 et 36 solidarisées toutes deux au recouvrement métallique 12 sur toute la longueur des joints 8 et 9 pour former le chambranle 14' de la porte. Ces surépaisseurs 35 et 36 sont calibrées de manière à étager les surfaces de pose pour manoeuvrer le batardeau sans accrocher le joint 8 à la surépaisseur 36.

Le tuyau 16 passant au travers de la surépaisseur 35 est relié au dispositif de détection 17 et comprend au point le plus bas un robinet de vidange accessible lorsque le compartiment situé du côté du dispositif de niveau 17 est mis à sec, tandis que le tuyau 37 passant au travers de l'autre surépaisseur 36 est reliée à la pompe à main 20. Dans cet exemple de réalisation, la pompe à main 20 et le dispositif de détection 17 sont placés de part et d'autre du mur de cloisonnement 10. Cette disposition permet notamment d'intercaler dans le tuyau 37, un second robinet de vidange situé au point bas de l'espace libre 15 et accessible lorsque le compartiment situé du côté opposé au dispositif de détection 17 est vide.

Dans d'autres exemples de réalisation, un espace libre tel que 15 raccordé à un dispositif détecteur tel que 17 peut être constitué par deux joints gonflables de formes ou de calibres différents solidarisés à la porte 2 et collaborant avec des surfaces de pose appropriées sur le chambranle 14 de la porte 2.

Au dispositif de détection constitué des deux détecteurs de niveau 21 et 23 on peut associer une alarme, qui avertit le personnel de l'apparition d'un problème d'étanchéité, associée ou non à un système d'enregistrement. L'alarme et le système d'enregistrement sont déclenchés à l'émission d'un signal d'un détecteur de niveau auxiliaire placé juste au-dessous du premier détecteur de niveau 21. Lorsque le niveau d'eau monte progressivement dans l'espace libre 15 il atteint d'abord le niveau d'émission du détecteur auxiliaire qui déclenche l'alarme avertissant le personnel ou, dans une installation rendue entièrement automatique, à la fois l'alarme et le système d'enregistrement. Dans ce dernier cas le système enregistre le temps écoulé entre les deux signaux émis par les détecteurs de niveau 21 et 23 et commande, en fin de cycle, une pompe électrique qui assure la vidange de l'espace libre 15 pour qu'un second cycle d'enregistrement puisse recommencer et rendre compte d'une évolution éventuelle du taux de fuite.

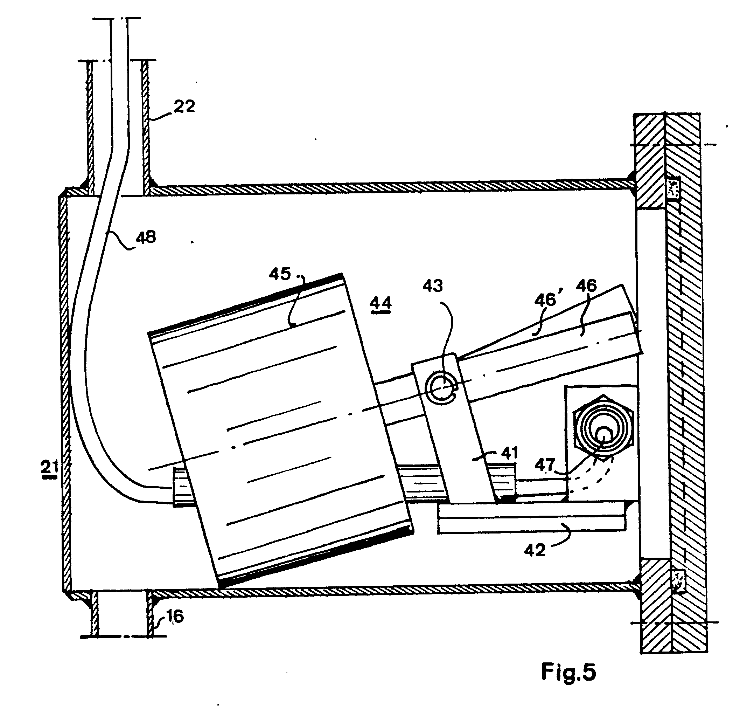

Les détecteurs de niveau 21 et 23 montrés en figure 2 sont identiques par construction et la figure 5 montre le détail d'un exemple de réalisation de l'un d'eux.

Le détecteur de niveau 21 se compose d'un corps cylindrique 40 à axe horizontal dans lequel débouchent respectivement les tuyaux 16 et 22 en des points diamétralement opposés, en haut et bas du corps cylindrique 40. Dans le corps cylindrique 40 est disposé un étrier 41 solidarisé à une plaque de fond 42 prenant appui directement sur les parois du corps cylindrique 40. L'étrier 41 porte un axe 43 sur lequel pivote un balancier 44 muni d'un flotteur 45 à une extrémité et dont l'autre extrémité se prolonge d'une pièce métallique 46. Lorsque le corps cylindrique 40 se remplit progressivement d'eau, le flotteur 45 s'élève dans le corps cylindrique 40 et, en basculant le balancier 44 abaisse la pièce métallique 46 devant un détecteur de proximité 47 qui envoie un signal dès que le balancier 44 occupe une position prédéterminée. Le détecteur de proximité 47 est alimenté en énergie électrique par des fils 48 protégés de tout impact extérieur par le tuyau 22 servant de gainage.

Dans un autre exemple de réalisation du détecteur de niveau inférieur 21, on peut superposer deux détecteurs de proximité sur le chemin suivi par la pièce métallique 46 et obtenir ainsi deux signaux distincts donnant soit directement le taux de fuite, soit un premier signal d'avertissement du personnel ou de mise en route du système d'enregistrement suivi d'un second signal donnant le moment précis où le premier niveau prédéterminé est atteint.

De même dans le détecteur de niveau supérieur 23, la superposition des détecteurs de proximité donnera un premier signal correspondant au moment où le second niveau prédéterminé est atteint suivi d'un second signal coupant le système d'enregistrement et enclenchant le dispositif de vidange de l'espace libre 15.

**Revendications**

1. Dispositif de mesure du taux de fuite pour joints d'étanchéité montés sur un batardeau (1) fermant une ouverture (11) dans un mur de cloisonnement (10) separant des compartiments voisins d'un bassin servant au stockage d'éléments de combustible irradié caractérisé en ce que la surface latérale immergée du batardeau (1) est conformée en gradins pour présenter des surfaces d'appui étagées sur lesquelles des joints d'étanchéité (8 et 9) sont disposés parallèlement l'un à l'autre de manière qu'en position de fermeture du batardeau (1), lesdits joints collaborent avec des surépaisseurs (13, 36, 37) du recouvrement metallique constituant le chambranle (14) d'une porte (2) ou d'un panneau coulissant formant le batardeau (1) pour constituer entre lesdits joints d'étanchéité (8 et 9) au moins un volume étanche appelé espace libre (15), et en ce que ledit espace libre (15) est raccordé à un dispositif de détection de niveau (17) à l'aide d'un tuyau (16) disposé au point bas de cet espace et dont le diamètre est inférieur à la surépaisseur (13) du chambranle (14), ceci afin de ne pas interrompre l'étanchéité.

2. Dispositif de mesure du taux de fuite selon la revendication 1, caractérisé en ce que ce dispositif de détection de niveau (17) est constitué de ce premier tuyau (16) raccordé à un premier détecteur de niveau (21) situé à un niveau inférieur, d'un second tuyau (22) réunissant le premier détecteur de niveau (21) à un second détecteur de niveau (23) situé à un niveau supérieur et d'un troisième tuyau (24) raccordé au second détecteur de niveau (23) et servant de trop plein au dispositif de détection de niveau (17).

3. Dispositif de mesure du taux de fuite selon la revendication 2, caractérisé en ce que l'espace libre (15) est raccordé, à un niveau situé en-dessous du premier détecteur de niveau (21), par un tuyau (19) passant au travers de la surépaisseur (13) à une pompe (20).

4. Dispositif de mesure de taux de fuite selon la revendication 2, caractérisé en ce que le tuyau (16) situé d'un côté du mur de cloisonnement (10) et raccordant l'espace libre (15) au dispositif de détection (17) en passant au travers d'une surépaisseur (35) est muni d'un robinet de vidange (18) placé au point bas du tuyau (16) et en ce qu'un tuyau (37) situé de l'autre côté du mur de cloisonnement (10) et raccordant l'espace libre (15) à la pompe (20) en passant au travers d'une surépaisseur (36) est muni d'un robinet de vidange placé au point bas du tuyau (37).

5. Dispositif de mesure du taux de fuite selon l'une des revendications 3 ou 4, caractérisé en ce qu'un premier détecteur de niveau auxiliaire placé juste au dessous du premier détecteur de niveau (21) commande l'enclenchement d'une alarme et/ou d'un dispositif qui enregistre le temps écoulé entre les deux signaux émis par les détecteurs de niveau (21 et 23).

6. Dispositif de mesure du taux de fuite selon la revendication 5, caractérisé en ce qu'un second détecteur de niveau auxiliaire placé juste au-dessus du second détecteur de niveau (23) commande l'enclenchement de la pompe de vidange (20).

7. Dispositif de mesure du taux de fuite selon la revendication 2, caractérisé en ce que chaque détecteur de niveau (21 ou 23) comprend un corps cylindrique (40), à axe horizontal, sur les parois intérieures duquel pose une plaque de fond (42) soutenant un étrier (41) muni d'un axe (43) autour duquel pivote un balancier (44) ayant à une extrémité un flotteur (45) et à l'autre extrémité une pièce métallique (46) qui, lorsque l'eau introduite dans le corps cylindrique (40) atteint un niveau prédéterminé, permet à un détecteur de proximité (47) d'envoyer un signal.

8. Dispositif de mesure du taux de fuite selon l'une quelconque des revendications 3, 4 ou 7,

caractérisé en ce que chaque détecteur de niveau comprend deux ddétecteurs de proximité (47) placé sur le parcours suivi de la pièce métallique (46) du balancier (44) lorsque le niveau d'eau varie à l'intérieur du corps cylindrique (40),

en ce que chacun des deux détecteurs de proximité (47) envoie un signal.

**Patentansprüche**

1. Vorrichtung zur Messung der Leckrate, für Dichtungen, die auf einer Abdämmung (1) angebracht sind, die eine Öfftung (11) in einer Trennwand (10) verschließt, die benachbarte Kammern eines Beckens trennt, das zur Lagerung von bestrahlten Brennelementen dient, dadurch gekennzeichnet, daß die eingetauchte seitliche Fläche der Abdämmung (1) stufenförmig ausgebildet ist, um abgesetzte Auflageflächen zu erhalten, auf denen Dichtungen (8 und 9) parallel zueinander angeordnet sind, und zwar in einer solchen Weise, daß in der geschlossenen Position der Abdämmung (1) die besagten Dichtungen mit Überdicken (13, 36, 37) der metallischen Verblendung zusammenwirken, die die Zarge (14) einer Türe (2) oder eines schiebetors bildet, aus denen die Abdämmung (1) besteht, wobei zwischen den besagten Dichtungen (8 und 9) mindestens ein dichtes Volumen gebildet wird, das freier Zwischenraum (15) genannt wird, und daß der besagte freie Zwischenraum (15) über ein Rohr (16) mit einer Niveaumeldevorrichtung (17) verbunden ist, wobei dieses Rohr (16) an dem unteren Punkt dieses Zwischenraums angeordnet ist, und sein Durchmesser kleiner als die Überdicke (13) der Zarge (14) ist, um die Abdichtung nicht zu unterbrechen.

2. Vorrichtung zur Messung der Leckrate gemäß Anspruch 1, dadurch gekennzeichnet, daß die Niveaumeldevorrichtung (17) gebildet wird von diesem ersten Rohr (16), das an einen ersten Niveaumelder (21) angeschlossen ist, der auf einem niedrigen Niveau angeordnet ist, und von einem zweiten Rohr (22), das den ersten Niveaumelder (21) mit einem zweiten Niveaumelder (23) verbindet, der auf einem oberen Niveau angeordnet ist, und von einem dritten Rohr (24), das an dem zweiten Niveaumelder (23) angeschlossen ist und als Überlauf für die Niveaumeldevorrichtung (17) dient.

3. Vorrichtung zur Messung der Leckrate gemäß Anspruch 2, dadurch gekennzeichnet, daß der freie Zwischenraum (15) bei einem Niveau unterhalb des ersten Niveaumelders (21) über ein Rohr (19), das durch die Überdicke (13) hindurchgeht, mit einer Pumpe (20) verbunden ist.

4. Vorrichtung zur Messung der Leckrate gemäß Anspruch 2, dadurch gekennzeichnet, daß das Rohr (16), das auf der einen Seite der Trennwand (10) angeordnet ist und den freien Zwischenraum (15) mit der Niveaumeldevorrichtung (17) verbindet, wobei es durch eine Überdicke (35) hindurchgeht, mit einem Ablaßhahn (18) versehen ist, der an dem unteren Punkt des Rohrs (16) angeordnet ist, und daß ein Rohr (37), das auf der anderen Seite der Trennwand (10) angeordnet ist und den freien Zwischenraum (15) mit der Pumpe (20) verbindet, wobei es durch eine Überdicke (36) hindurchgeht, mit einem Ablaßhahn versehen ist, der an dem unteren Punkt des Rohrs (37) angeordnet ist.

5. Vorrichtung zur Messung der Leckrate gemäß einem der Ansprüche 3 oder 4, dadurch gekennzeichnet, daß eim erster Hilfs-Niveaumelder, der unmittelbar unterhalb des ersten Niveaumelders (21) angeordnet ist, die Auslösung eines Alarms und/oder die Einschaltung einer Vorrichtung steuert, wobei diese Vorrichtung die Zeit aufzeichnet, die zwischen den zwei von den Niveaumeldern (21 und 23) ausgesendeten Signalen verstrichen ist.

6. Vorrichtung zur Messung der Leckrate gemäß Anspruch 5, dadurch gekennzeichnet, daß ein zweiter Hilfs-Niveaumelder, der unmittelbar oberhalb des zweiten Niveaumelders (23) angeordnet ist, die Einschaltung der Entleerungspumpe (20) steuert.

7. Vorrichtung zur Messung der Leckrate gemäß Anspruch 2, dadurch gekennzeichnet, daß jeder Niveaumelder (21 oder 23) einen zylindrischen Körper (40) mit horizontaler Achse aufweist, auf dessen Innenwänden eine Bodenplatte (42) aufliegt, an der ein Bügel (41) befestigt ist, der mit einer Achse (43) versehen ist, um die sich eine Wippe (44) dreht, die an einem Ende einen Schwimmer (45), und an dem anderen Ende ein metallisches Teil (46) aufweist, wobei dieses metallische Teil (46) bewirkt, daß ein Näherungssensor (47) ein Signal aussendet, wenn das in den zylindrischen Körper (40) eindringende Wasser ein vorgegebenes Niveau erreicht.

8. Vorrichtung zur Messung der Leckrate gemäß irgendeinem der Ansprüche 3, 4 oder 7, dadurch gekennzeichnet, daß jeder Niveaumelder zwei Näherungssensoren (47) aufweist, die auf der Bahn angeordnet sind, auf der sich das metallische Teil (46) der Wippe (44) bewegt, wenn sich das Wasserniveau innerhalb des zylindrischen Körpers (40) ändert, und daß jeder der zwei Näherungssensoren (47) ein Signal aussendet.

**Claims**

1. Device for measuring the rate of leakage for sealing elements mounted on a barrage (1) closing an aperture in a partition wall (10) separating neighbouring compartments of a basin used for storing irradiated fuel elements, characterised in that the immersed lateral surface of the barrage (11) is formed with steps so as to present tiered bearing contact surfaces on which sealing elements (8 and 9) are arranged parallel to one another in such a manner that in the closure position of the barrage (1) the said sealing elements co-operate with extra-thickness portions (13, 36, 37) of the metal cladding constituting the casing (14) of a door or sliding panel forming the barrage (1) for constituting between the said sealing elements (8 and 9) at least one sealing-tight volume referred to as the free space (15), and in that the said free space (15) is connected to a level detection device (17) by means of a pipe (16) arranged at the bottom of this space and the diameter of the said pipe is less than the extra-thickness portion (13) of the casing (14) in order not to interrupt the seal.

2. Device for measuring rate of leakage according to claim 1, characterised in that this level detection device (17) is constituted by this first pipe (16) connected to a first level detector (21) situated at a lower level, by a second pipe (22) connecting the first level detector (21) to a second level detector (23) situated at an upper level, and by a third pipe (24) connected to the second level detector (23) and acting as an overflow for the level detection device (17).

3. Device for measuring rate of leakage according to claim 2, characterised in that the free space (15) is connected, at a level situated below the first level detector (21), by a pipe (19) extending through the extra-thickness portion (13, to a pump (20).

4. Device for measuring rate of leakage according to claim 2, characterised in that the pipe (16) situated at one side of the partition wall (10) and connecting the free space (15) to the detection device (17), passing through an extra-thickness portion (35), is provided with a drain cock (18) situated at the lower region of the pipe (16), and in that a pipe (37) situated at the other side of the partition wall (10) and connecting the free space (15) to the pump, passing through an extra-thickness portion (36), is provided with a drain cock situated at the lower region of the pipe (37).

5. Device for measuring rate of leakage according to one of claims 3 or 4, characterised in that a first auxiliary level detector situated just below the first level detector (21) controls the actuation of an alarm and/or of a device which records the time elapsed between the two signals emitted by the level detectors (21 and 23).

6. Device for measuring rate of leakage according to claim 5, characterised in that a second auxiliary level detector situated just above the second level detector (23) controls the actuation of the draining pump (20).

7. Device for measuring rate of leakage according to claim 2, characterised in that each level detector (21 or 23) comprises a cylindrical body (40) which is arranged with its axis horizontal and on the internal walls of which there rests a base plate (42) supporting a strap (41) provided with a pivot pin (43) about which there can move pivotably a rocker arm (44) having at one end a float (45) and at the other end a metallic part (46) which, when the water entering the cylindrical body (40) reaches a predetermined level, allows a proximity detector (47) to emit a signal.

8. Device for measuring rate of leakage according to any one of claims 3, 4 or 7, characterised in that each level detector comprises two proximity detectors (47) arranged on the path of travel followed by the metallic part (46) of the rocker arm (44) when the water level varies within the cylindrical body (40), and in that each of the two proximity detectors (47) emits a signal.

Fig. 1

Fig. 2

Fig. 3

Fig. 4

Fig.5